# EUROPEAN PATENT APPLICATION

(11) **EP 0 623 375 A1**
(43) Date of publication of application: **09.11.1994**
(21) Application number: 94201209.7
(22) Date of filing: 02.05.1994
(51) Int. Cl.: B01D 45/16

(54) **Fast solid-gas separators**

(30) Priority: 04.05.1993 IT MI930882
(71) Applicant: MINISTERO DELL' UNIVERSITA' E DELLA RICERCA SCIENTIFICA E TECNOLOGICA, I-00196 Roma (IT)
(72) Inventor: Donsi, Giorgio, 80125 Napoli (IT); Sesti Osseo, Libero, 80045 Pompei, Napoli (IT); Schenato, Maurizio, 20099 Sesto San Giovanni, Milano (IT)
(74) Representative: Fusina, Gerolamo

(57) **Abstract**

A apparatus for separating solid particles and a gas phase which contains them, which consists of a bent-axis duct.

On the outermost surface of the bent portion, a slit is provided through which the solid products escape to the outside. The limited volume of the apparatus allows both phases to be separated with low residence times.

## Description

The present invention relates to an apparatus for separating solid particles from a gas phase which contains them.

The present invention also relates to a process for separating solid particles from a solid-gas mixture, which uses said apparatus.

The need for separating the solid particles contained in a gas is particularly felt in the production processes using fluidized bed reactors. The most widely known apparatuses for gas-solid separation are cyclones, which consist of a cylindrical chamber the lower portion of which is given an elongated-cone shape. The biphasic fluid enters the chamber at the high side thereof, in a tangential direction, causing a circular-vortex flow pattern. The considerable decrease in gas velocity, together with the centrifugal force which pushes the particles towards the wall, cause the segregation of said phases: i.e., the solid matter in the outermost portion of the chamber flows downwards precipitating along the bottom conical portions, from which it leaves to the outside; the gas, changing its flow direction, leaves said chamber from the top portion thereof, through a coaxial duct with the same chamber.

Additionally to traditional cyclones, different types of apparatuses have been proposed and used.

In U.S. patent No. 4,348,364; a system is disclosed for separating solid particles from gas-solid streams from TRC (Thermal Regenerative Cracking) processes. The primary separator unit is positioned at reactor outlet, wherein the reactant mixture displays high temperature, as well as high velocity values, which may be as high as 50 m/second.

The residence times of the process gas inside the apparatus are short. The separation takes place by centrifugal projection of the solid particles towards a solid bed.

The separator unit consists of a chamber inside which the gas phase and the solid phase are caused to change their flowing direction by 180 degrees and 90 degrees, respectively. Inasmuch as the reactor is of downflow type, the gas-solid mixture enters it from the top side thereof. During separator operation, inside the chamber, on the opposite surface to the inlet fitting, a thick layer of solid matter is deposited, and protect the chamber wall from getting corroded.

In U.S. patent No. 4,664,888 an apparatus is disclosed for gross catalyst-reactant gases separation in FCC (Fluid Catalytic Cracking) processes. The separator unit, installed at catalyst riser outlet, causes the stream flowing direction to be reversed downwards.

Said apparatus is of semispherical shape and is equivalent to a cyclone inside which a 180-degrees rotation of the gas flow direction takes place. At the end of the bent path, a blade takes the catalyst away, towards the walls of the chamber, from which it falls back into the fluidized bed. The vapour phase, having available the whole chamber volume, leaves the chamber from its top side, flowing through a set of conventional cyclones. The Applicant states that the apparatus is relatively efficient, it sometimes being even more efficient than the "Dragonhead" separator disclosed in U.S. patent No. 3,448,037.

In U.S. patent No. 4,732,113; an apparatus is disclosed for separating solid particles from exhaust gas streams produced in steam generation boilers. Said streams from the combustion chamber are injected into the separation chamber according to a tangential direction through a suitable duct. The solid matter falls back into the combustion chamber from an opening provided in the outermost portion of the separator. The novelty of the apparatus consists in the gas outlet duct. It is formed by a large number of finned tubes through which cooling fluid flows. The fins define path flows (grooves) through which the gas is obliged to flow, with sharp changes in its flow direction. This feature leads to an increase in efficiency.

Chemical reactions using a solid matter into contact with reactant gases have been long known. For example, in fluidized bed reactors, the solid particles can take a part in the reactions as a catalyst, or they may act as heat buffers for both endothermal and exothermal processes. The large heat exchange surfaces, the large heat capacities as compared to the exchanged heat, the great mixing allow the reactions to be carried out with a slightly variable temperature profile. On the contrary, these devices are not recommended for very fast reactions, because the consequent limited depth of their bed would cause stability problems. In that case, the reactions are preferably carried out under pneumatic transport conditions, which make it possible short residence times and a reduced back-mixing to be achieved. For these reactors, the main problem is the time required for gas-solid separation, which should occur immediately after the reaction took place. For instance, for catalysed reactions the degradation of the products must be stopped by removing the catalyst from the reactant mass.

For non-catalysed, high-temperature gas-phase reactions in which the solid phase only supplies the reaction heat, a fast cooling is necessary. Unfortunately, the quenching can only take place after phase separation, in order not to have unacceptable energy inefficiencies. In these cases, the use is hence required of rather efficient gas-solid separators, operating in the reaction loop and allowing high separation speeds.

These should be at least one order of magnitude higher than the degradation rates of the obtained products. The above disclosed cyclones do not address this crucial problem.

Only UNIFLOW CYCLONE (T.A. Gauthier et al., Powder Technology, 62, 1990, page 217) allows short enough residence times. The originality of this apparatus consists in that the gas is not obliged to change its flow direction relatively to the solid phase, as it occurs in conventional cyclones. The solid matter and the gas leave the apparatus as separate streams, from the same side; in fact, the gas outlet duct is placed at a rather low level inside the interior of the cyclone chamber.

This apparatus type was tested with ducts of 0.05 m of diameter and rather low solid and gas flow rate values.

Therefore, one might think that the short residence times obtained may also be due to a scale factor, besides the geometry of the apparatus. Furthermore, inasmuch as the axis of the cyclone can only be vertical, the stream of the mixture to be separated changes its flow direction a plurality of times, with the pressure drops and inner surface erosion problems being increased.

The present invention relates to an apparatus for separating solid particles from a solid-gas mixture, which solves the problem of large flow rates of solid-gas mixture to be separated with short residence times.

The separator unit of the present invention is based on an inertial separation of solid particles along the bent wall of a duct; as the gas, in such a separator unit, is confined inside a duct, said gas does not generate vortex zones and recirculation streams. The bending radius of the duct is kept large enough in order not to experience the separation of the fluid stream.

On the basis of the above, the present invention relates to an apparatus for separating solid particles from a gas-solid mixture, which consists of a duct length having rectangular cross-section the axis of which describes a semi-circumference wherein the internal (S1) and external (S2) surfaces of the duct are semicylindrical and concentric, and the front and back surfaces are flat and contoured in order to follow the bending of the axis of the duct, and on the external surface (S2), at a certain angular distance from the beginning of the bend of the duct, there is provided a slit having a suitable thickness from which the solid particles are obliged to leave the apparatus in a tangential direction relatively to the circular path of the gas.

The present invention also relates to a process for separating solid particles preferably having a granulometry comprised within the range of from 50 to 200 µm, from a solid-gas mixture, which uses the above apparatus.

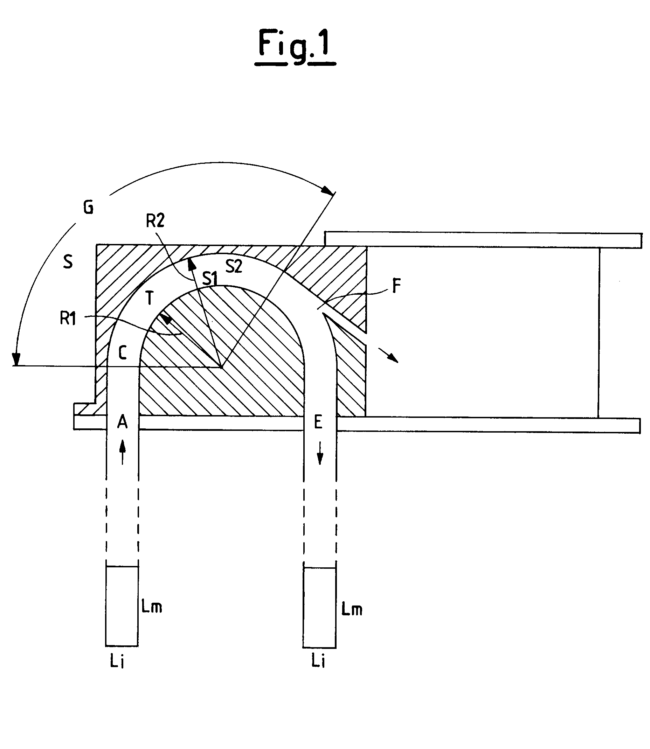

In Figure 1, the horizontal and vertical cross-sectional views of the present invention are displayed.

The solid-gas mixture is fed to the separator (S) through the end (A) of a flow zone bounded by two semicylindrical concentric surfaces (S1) and (S2) which are such as to form the internal and external walls of a rectangular-"U"-shaped cross section (T). The depth of both surfaces (S1) and (S2) determines both major sides of said rectangle (Lm) and the difference obtained from the bending radius (R2) less the bending radius (R1) of both said surfaces, defines the length (Li) of the minor sides of said rectangle.

At its minor sides (Li), the duct is closed by two further,i.e., a front and a rear, flat surfaces, which are suitably contoured in order to follow the bending of the axis. The surface (S2) is interrupted by the slit (F) tangent to it and placed at a certain angular distance (G), approximately of 120 degrees, from the point (C) of beginning of the bend of the duct. The gas leaves the separator unit (S) through the end (E) of the tube (T). On the contrary, most solid matter gathers on the upper surface (S2) and leaves the apparatus by tangentially flowing through the slit (F). The gas-solid contact time inside the apparatus is determined by the speed at which the mixture flows along the angle (G).

The selection of the dimensions of the apparatus according to the present invention is strictly a function of the chemical-physical characteristics of the gas and of the solid materials, of separation efficiencies, of pressure losses and of the residence times which one wishes to obtain. In particular, the bending radiuses (R1) and (R2) and their ratio to the side (Li), are important. The depth of the side (Lm) can be regarded as being rather uninfluential for the purposes of separation effectiveness. It can be used as a scaling-up ability parameter for large amounts to be separated. On the contrary, the thickness of the slit (F) depends on the ratio of solid matter to gas flow rates.

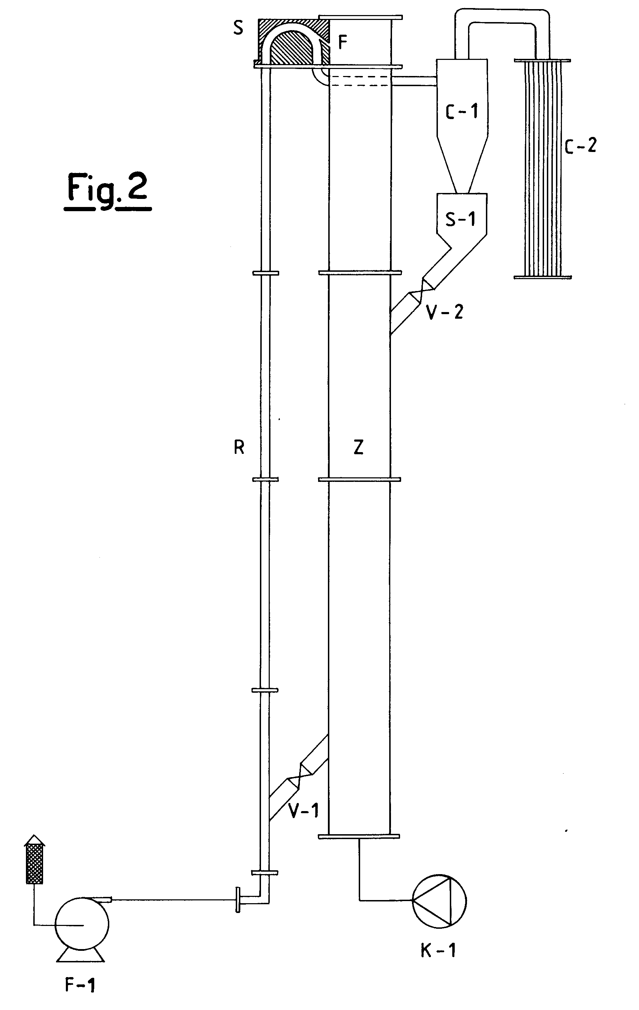

In Figure 2, the scheme is shown of the pilot facility with which a large number of experimental tests according to the present invention were carried out. It is a typical cold model of circulating fluidized bed reactor (CFBR).

The used gas is air, and the solid particles are glass bubbles. In order to verify the influence of particle size on the separation efficiency, particles having different average diameter have been used.

In Figure 2, a vertical duct (R), i.e., a "riser", can be seen, having a rectangular cross section of 0.1 x 0.04 m, inside which the gas-solid mixture to be separated flows upwards. The carrier air is fed to the riser (R) from the basis thereof by using the blower (F-1), and the solid material is fed from the standpipe (Z) through the throttle valve (V-1). To the head of the riser (R) the separator (S) disclosed hereinabove is applied by means of flanges, wherein the characteristic dimensions are as follows: R1 = 0.1 m; R2 = 0.14 m; Lm = 0.1 m; G = 120 sexagesimal degrees.

The separated solid leaves the apparatus through the slit (F), falls back into the standpipe (Z) inside which it is kept fluidized by fludizing air from the compressor (K-1) and the gases leaving the separator (S) are sent to the auxiliary cyclone (C-1) inside which the residual solid particles are separated. The latter are intermittently sent to the standpipe (Z) through the throttle valve (V-2), after being preliminarily evaluated in the collecting graduated tank (S-1).

Before being vented to the environment, the gas is caused to flow through the cartridge filter (C-2).

During the test, the opening of the valve (V-1) and the flow rate of the blower (F-1) were changed in order to secure the pneumatic transport of the solid particles. In other terms, the tests were carried out with air velocity being always higher than the so-said "choking velocity".

In order to calculate the efficiency of the separator (S), the amount of solid material collected inside the tank (S-1) was reported on a chart as a function of the flow rate of the circulating solid material, negliging the minimal amounts entrapped in the cartridge filter (C-2).

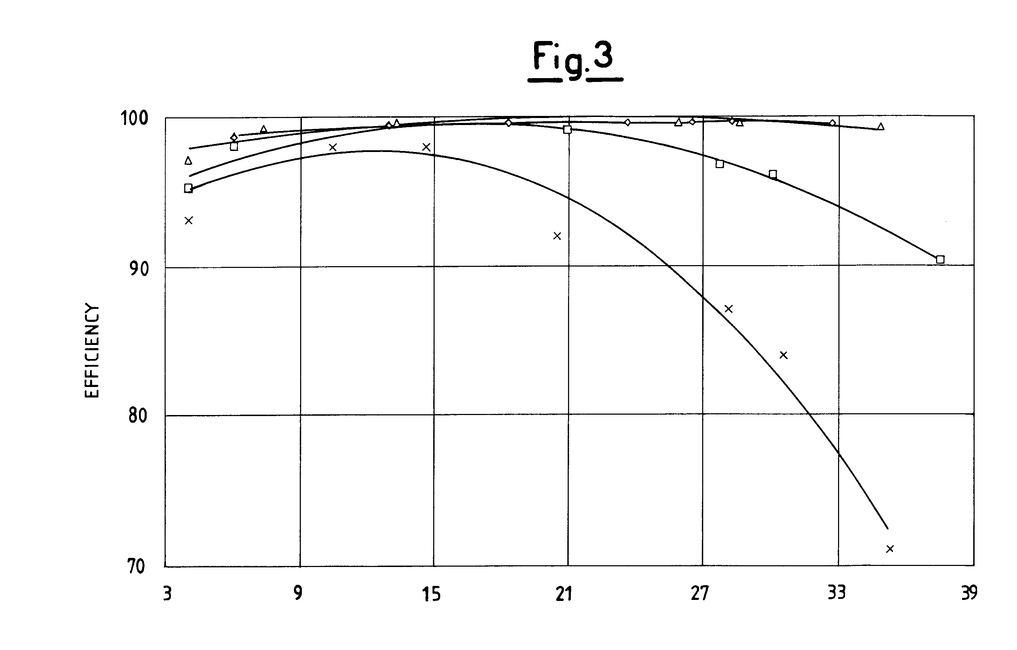

The chart reported in Figure 3 represents tests carried out by using particles having average diameter of 100 µm. It displays the efficiency of the separator as a function of the velocity, as metres/second, of the gas in the riser and for four values of solid matter flow rate (Gs), expressed as kg/(m²*s); the four corresponding lines, one for each value, are characterized by the following respective symbols: ◇ for Gs = 400 kg/(m²*s); △ for Gs = 300 kg/(m²*s); □ for Gs = 100 kg/(m²*s) and x for Gs = 50 kg/(m²*s).

It should be observed that, for some values of operating parameters, the obtained efficiency values resulted to be higher than 99%. Still satisfying results have been obtained also with particles having diameter lower than 100 µm. Therefore, for particles having average diameter large enough, e.g. higher than 50 µm, the present invention provides high values of separation efficiencies with short gas residence times inside the apparatus.

## Claims

1. Apparatus for separating solid particles from a gas-solid mixture, which consists of a duct length with a rectangular cross-section, the axis of which describes a semi-circumference,wherein the internal (S1) and external (S2) surfaces of the duct are semicylindrical and concentric, and the front and back surfaces are flat and contoured in order to follow the bending of the axis of the duct, and on the external surface (S2), at a certain angular distance from the beginning of the bend of the duct, there is provided a slit having a suitable thickness from which the solid particles are obliged to leave the apparatus in a tangential direction relatively to the circular path of the gas.

2. Apparatus according to claim 1, characterized in that said semicylindrical and concentric duct surfaces, have bending radiuses of R1 = 0.1 m and R2 = 0.14 m, respectively, of length, and the rectangular portion of the duct has, as its sides, Li = R2-R1 and Lm = 0.1 m, respectively, and the slit is at 120° from the beginning of the bend of the duct.

3. Process for separating solid particles from a gas-solid mixture characterized in that said mixture is fed to an apparatus for separating solid particles from a gas-solid mixture, which consists of a duct length having a rectangular cross-section, the axis of which describes a semi-circumference, wherein the internal (S1) and external (S2) surfaces of the duct are semicylindrical and concentric, and the front and back surfaces are flat and contoured in order to follow the bending of the axis of the duct, and on the external surface (S2), at a certain angular distance from the beginning of the bend of the duct, there is provided a slit having a suitable thickness from which the solid particles are obliged to leave the apparatus in a tangential direction relatively to the circular path of the gas which, by now free from solid particles, leaves the appararus from the duct end.

4. Process according to claim 3 characterized in that said semicylindrical and concentric duct surfaces, have bending radiuses of R1 = 0.1 m and R2 = 0.14 m, respectively, of length, and the rectangular portion of the duct has, as its sides, Li = R2-R1 and Lm = 0.1 m, respectively, and the slit is at 120° from the beginning of the bend of the duct.
